# EUROPEAN PATENT APPLICATION

(11) **EP 2 728 446 A2**
(43) Date of publication of application: **07.05.2014**
(21) Application number: 13191129.9
(22) Date of filing: 31.10.2013
(51) Int. Cl.: G06F 3/03, H04L 29/08, G06F 3/041, G06F 3/0346

(54) **Method and system for sharing contents**

(30) Priority: 01.11.2012 KR 20120122914
(71) Applicant: Samsung Electronics Co., Ltd, Gyeonggi-do 443-742 (KR)
(72) Inventor: Ahn, Changhyun, Gyeonggi-do 443-742 (KR); Park, Jiyoon, Gyeonggi-do 443-742 (KR); Lee, Hana, Gyeonggi-do 443-742 (KR); Hwang, Sooji, Gyeonggi-do 443-742 (KR)
(74) Representative: Gover, Richard Paul

(57) **Abstract**

A method and system for sharing contents includes: forming a communication channel for transmitting a content item when a first and second terminals partially overlaps with each other; and providing a content item of the first terminal to the second terminal, or a content item of the second terminal to the first terminal through the communication channel in response to an input event in a state that the first terminal partially overlaps with the second terminal.

## Description

### BACKGROUND

### Field of the Invention

The present invention relates to a method and system for sharing contents between electronic devices based on a contact there between.

### Description of the Related Art

Many peoples prefer portable terminals for exchange data and voice communication. There is a growing trend in that use of such terminals due to a support of hardware and software capable of providing various multimedia contents in a larger touch screen.

The conventional terminals support a content sharing function using a hardware module mounted thereon to establish a communication channel between the terminals for sharing of contents.

However, the conventional terminals require a user to perform a complicate procedure in which the terminals perform a mutual recognition in order to support a content sharing between the terminals. Therefore, a user essentially performs a setting process of forming a communication channel for transferring contents which requires a user to an input of a complicated PIN code or perform an identification of various conditions.

Accordingly, there is a need for a simpler and more intuitive way of providing means to share contents between the terminals.

### SUMMARY

The present invention has been made in order to solve the conventional art as described above and provides additional advantages, by providing a method and system for sharing contents which enable the terminals partially overlap with each other to exchange or share the contents.

Another aspect of the present invention is to provide a method and system for sharing contents in response to a request of a terminal.

In accordance with an aspect of the present invention, a content sharing system includes: a first terminal having a display unit for displaying at least one content item thereon; and a second terminal having a transparent display unit for selecting the at least one content item displayed on the first terminal over the transparent display unit on a state when the second terminal partially overlaps the first terminal so that the selected at least one content can be transferred to the transparent display unit of the second terminal during a receiving mode.

In accordance with another aspect of the present invention, a portable terminal includes a transparent display unit, for detecting a touch input to select at least one content item displayed on another portable terminal when the transparent display unit is partially overlaid over the another portable terminal forming a communication channel there between and providing the selected at least one content from the another terminal on the transparent display unit for execution.

In accordance with still another aspect of the present invention, a content sharing method includes:forming a communication channel for transmitting at least one content item when a first terminal having a transparent display unit partially overlaps over a second terminal; and providing the at least one content item from the second terminal on the transparent display unit of the first terminal in response to an input event on the transparent display unit of the first terminal selecting the at least one content item from the second terminal in a state that the first terminal partially overlaps over the second terminal.

As described above, according to the method and system of the present invention, the present invention supports such that the terminals can simply and easily share the contents as the terminals partially overlap with each other.

### BRIEF DESCRIPTION OF THE DRAWINGS

The above features and advantages of the present invention will be more apparent from the following detailed description in conjunction with the accompanying drawings, in which:
FIG. 1 is a schematic view illustrating a configuration of a system for sharing contents according to embodiments of the present invention;
FIG. 2 is a block diagram illustrating a configuration of terminals included in the system shown in FIG. 1;
FIG. 3 is a view illustrating a configuration of a second terminal according to the present invention;
FIG. 4 is a view illustrating a function of sharing a content item according to the first embodiment of the present invention;
FIG. 5 is a view illustrating a function of sharing a content item according to the second embodiment of the present invention;
FIG. 6 is a view illustrating a method of sharing contents according to the embodiments of the present invention;
FIG. 7 is a flowchart illustrating a method of operating a first terminal in order to share the contents according to the embodiments of the present invention;
FIG. 8 is a flowchart illustrating a method of operating a second terminal in order to share the contents according to the embodiments of the present invention;
FIG. 9 is a view illustrating a specification of a position and a orientation of the terminals according to the embodiments of the present invention; and
FIG. 10 is a view illustrating a method of specifying a position and a orientation of the terminals according to the embodiments of the present invention.

### DETAILED DESCRIPTION

Hereinafter, the embodiments of the present invention will be described with reference to the accompanying drawings. For the purposes of clarity and simplicity, a detailed description of known functions and configurations incorporated herein will be omitted as it may make the subject matter of the present invention unclear.

In the drawings, some structural elements are enlarged, omitted, or schematically shown in the accompany drawings for illustrative purposes. The substantial size of each structural element is not wholly reflected in the size of the structural element in the drawings. Thus, the present invention is not limited by a relative size and arrangement of the structural elements in the accompanying drawings.

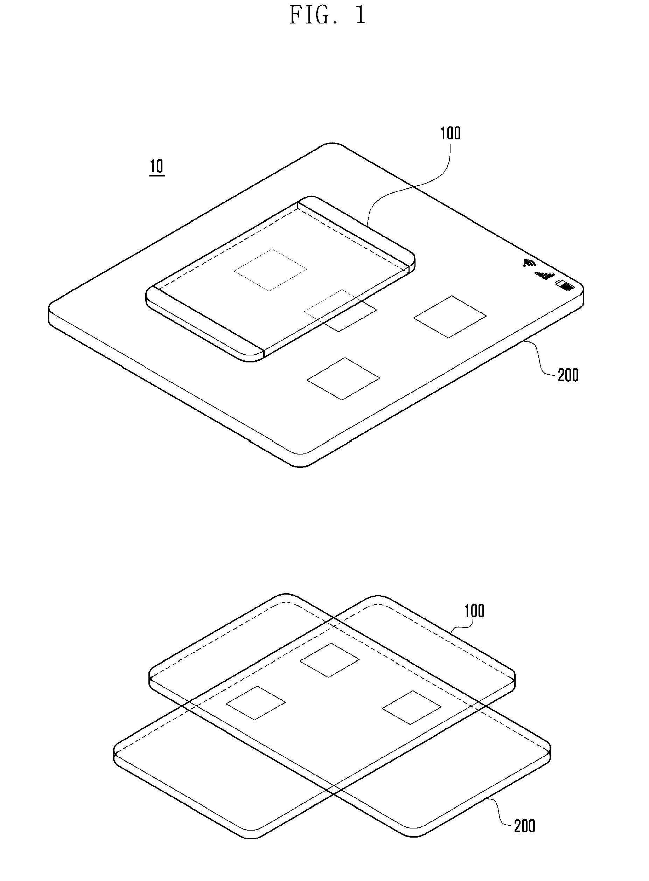

FIG. 1 is a schematic view illustrating a configuration of a system for sharing contents according to embodiments of the present invention.

Referring to FIG. 1, a content sharing system 10 may include a first terminal 100 and a second terminal 200. In addition, the content sharing system 10 further includes an structure for determining a position of the terminals 100 and 200, for example, at least one signal transmitter (not shown) for transmitting a location signal at a designated location in order to identify a position of each terminal 100 or 200. The signal transmitter may transmit information of positions itself to the terminals 100 and 200.

The signal transmitter may transmit a location signal at a predetermined position for identifying a position of a corresponding terminal 100 or 200 in order to determine an overlapping state of the terminals 100 and 200. The signal transmitter may transmit information of at least three positions itself to the terminals 100 and 200, so as to support that the terminals 100 and 200 detect their absolute position. For example, The terminals 100 and 200 may determine their absolute position using triangulation method or global positioning system.

In an alternate embodiment, a different means to identify the overlapping state of the terminals 100 and 200 can be used instead of the signal transmitter. For example, if the terminals 100 and 200 are designed to have a separate coil or a touch panel mounted thereon to serve as determining the overlapping state of the terminals 100 and 200.

In operation, when the first terminal 100 is disposed to partially overlap the second terminal 200, the content sharing system 10 having a configuration as described above, supports so that specific content item stored in the second terminal 200 is transmitted to the first terminal 100 according to a selection request of a content item. Therefore, the content sharing system 10 may support so that a user simply performs a content sharing operation without performing a complicated protocols to achieve the same. That is, the present invention provides an intuitive method in which during a transmission or a reception of files between the terminals 100 and 200, screens of the terminals 100 and 200 overlap with each other to exchange the files, and a file transmission starts when a file displayed through a transparent display unit is touched or a terminal is dragged to touch the file. As a result, a user can receives the desired data content by performing one touch.

The first terminal 100 has a transparent display unit, and is placed on an upper surface of the second terminal 200. The first terminal 100 may identify items output on a display unit of the second terminal 200 through its transparent display unit. Here, the transparent display unit provided to the first terminal 100 may include a touch panel. More specifically, the first terminal 100 may detect a touch event generated on its transparent display unit as a selection request for sharing a content item, and transmits a selected item or object according to the touch event to the second terminal 200.

Further, The first terminal 100 may transmit a selection signal corresponds to the touch event generated on touch panel of the first terminal 100 to the second terminal 200 and receive a content item or object which is stored in the second terminal 200 according to the selection signal transmitted by the first terminal 100 from the second terminal 200. The first terminal 100 may store the received content item or object in a storage unit or to display it on the transparent display unit of the terminal 100.

When the first terminal 100 is placed on the upper surface of the second terminal, the second terminal 200 transmits the selected content item to the first terminal 100 in response to a selection signal received from the first terminal 100. Thesecond terminal 200 may have a size larger than that of the first terminal 100 or an identical size to that of the first terminal 100 as shown in FIG. 1. Alternatively, the second terminal 200 may be smaller than that of the first terminal 100. The second terminal 200 may collects position and orientation information on a state in which the second terminal 200 overlaps the first terminal 100. The second terminal 200 may determine a location where the touch event transmitted from the first terminal 100 matches on the display unit of the second terminal based on the collected position and orientation information. Then, the second terminal 200 may determine a specific content item corresponding to the touch event location transmitted from the first terminal 100 and transmit the selected item to the first terminal 100. In the content sharing system 10 as described above, since the first terminal 100 may provides selection signal correspond to a touch event pointing one of the content items displayed on the display unit of the second terminal 200. The second terminal 200 has to identify a location on which displayed content item correspond to the selection signal provided by the first terminal 100.

To achieve this, the content sharing system 10 may include a sensor unit having a variety of sensors to identify a position of the first and second terminals 100 and 200, and a communication unit having at least one specific communication module. In addition, the content sharing system 10 may have other additional elements of the terminals 100 and 200, or may operate existing elements in order to identify the position of the terminals 100 and 200.

With respect to the identification of the position of the terminals 100 and 200, the first terminal 100 and the second terminal 200 may independently perform the identification of the position. Specifically, the first terminal 100 and the second terminal 200 may share the position information with each other, or one of terminals may mainly calculate a position with respect to the other terminal. For example, the first terminal 100 may perform an identification of orientation with respect the second terminal 200 as it overlaps over the second terminal 200. The first terminal may calculate location information on which portion of a display unit of the second terminal 200 the touch event generated on the first terminal display corresponds to in the second terminal display. Then, the first terminal 100 may provide information corresponding to location of the touch input on the first terminal display 100 to the second terminal 200.

Alternatively, the second terminal 200 identifies the orientation of the first terminal 100 placed thereon, and determines which portion or location of its display unit matches the position of the touch event generated and received from the first terminal. In the embodiment, the first terminal 100 is configured in a form of a transparent display unit, in order for a user to directly identify or recognize content items displayed on the display unit, and to generate a touch event for a selection of a certain content item displayed on the second terminal 200 underneath. That is, the display unit of the second terminal 200 displays content items which a user can see through the transparent display unit of the first terminal 100. Here, even if the second terminal 200 does not have a transparent display unit, it can support the content sharing function of the present invention.

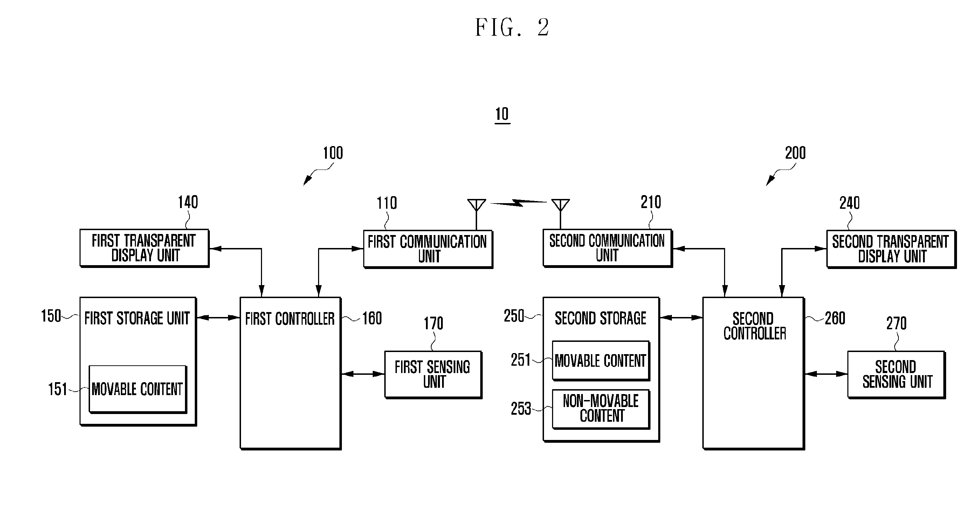

FIG. 2 is a block diagram illustrating a configuration of the first and second terminals among the structures of the content sharing system according to the present invention.

Referring to FIG. 2, the first terminal 100 includes a first communication unit 110, a first transparent display unit 140, a first storage unit 150, a first sensing unit 170, and a first controller 160. Further, the second terminal 200 includes a second communication unit 210, a second transparent display unit 240, a second storage unit 250, a second sensor 270, and a second controller 260.

Firstly, in the first terminal 100, the first communication unit 110 may supports a communication function of the first terminal 100. The first communication unit 110 may support a mobile communication function of the first terminal 100. Further, the first communication unit 110 may form a communication channel together with the second communication channel 210 of the second terminal 200 in order to support the content sharing function of the present invention. For example, the first communication unit 110 may include at least one of communication modules such as UWB module, NFC module, Bluetooth module, and WiFi module. The first communication unit 110 may perform two important functions in order to support the content sharing function of the present invention. Firstly, the first communication unit 110 may perform a function of determining a position of the first terminal 100. More particularly, in a case that the UWB module is used as the first communication unit 110, the first communication unit 110 receives a beacon signal from a plurality of beacon signal generators, and transmits the beacon signal to the first controller 160 so that the first controller 160 determinesof a position of the first terminal 100 based on position information from the plurality of beacon signal generators. On the other hand, in a case that the NFC module is used as the first communication unit 110, the first communication unit 110 communicates with an NFC module provided to the second communication unit 210 of the second terminal 200 so as to provide position information the second terminal 200. The Bluetooth communication module or the WiFi communication module may also be configured to operate as the first communication unit 110 for determining the position of the first terminal 100.

The first communication unit 110 forms a communication channel together with the second terminal 200 in order to support a content sharing function of the present invention, and performs a function of receiving a content item, which a user selects, through a corresponding communication channel. The content item received by the first communication unit 110 is automatically stored in the first storage unit 150 according to a configuration of the first terminal 100, and also it is displayed on the first transparent display unit 140 at the same time as it is received by the first communication unit 110.

The first transparent display unit 140 may provide various screens with relation to the operation of the first terminal 100. Especially, the first transparent display unit 140 has variable transparency and may change the transparency according to a displayed image. That is, the first transparent display unit 140 may become transparent under a control of the first controller 160, and make some regions of the second terminal 200, which is placed with overlapping, displayed to the user. Further, under the control of the first controller 160, the first transparent display unit 140 may display various menu items or at least one icon for the selection of the content sharing function. Also, the first transparent display unit 140 may display a content item transmitted from the second terminal 200. At this time, the first transparent display unit 140 may output at least one of an icon corresponding to the content item and a content item reproduction screen. The first transparent display unit 140 may have a touch panel mounted on a front or rear surface of a display panel. Accordingly, the first transparent display unit 140 may operate as an input means supporting a generation of a touch event.

In the present invention, when the first terminal 100 is placed on the second terminal 200 in an overlapping state, the first transparent display unit 140 may detect a touch event for designating at least one of the content items displayed on the display unit of the second terminal 200. Further, the first transparent display unit 140 may generate an event responsive to the detected touch input for instructing the first terminal 100 to designate and share the content items displayed on the display unit of the second terminal 200. Further, the first transparent display unit 140 may detect a touch event requesting to release a content sharing mode.

The first storage unit 150 has various data and programs necessary for an operation of the first terminal 100 stored therein. For example, the first storage unit 150 may store various programs, data, routines, and the like for use in an operation of the first communication unit 110 included in the first terminal 100. Further, the first storage unit 150 may store various programs, data, and the like in order to support an operation of the first sensing unit 170. Especially, the first storage unit 150 may store movable contents 151 received from the second terminal in the process of sharing contents.

Under a control of the user, in the state that the first terminal 100 is placed over the second terminal 200, the movable contents 151 are transmitted from the second terminal 200 to the first terminal 100 when an input event is generated. Particularly, the second terminal 200 may include movable contents and non-movable contents in its storage unit. When an input is detected in the first terminal display on its transparent display unit, the detected in put position corresponding to a specific icon displayed on the second terminal 200 is mapped, then the selected icon displayed in the second terminal 200 is displayed in the first terminal 100 while the selected icon or the content corresponding to the selected icon is transferred from the second terminal 200 to the first terminal 100. The first storage unit 150 may receive and store the movable contents transmitted by the second terminal.

In addition, the first storage unit 150 may temporarily store various sensing signals collected by a sensing operation of the first sensing unit 170. The first storage unit 150 may temporarily store a signal received by the first communication unit 110. The communication signal and the sensing signal which are received by the first communication unit 110 and the first sensing unit 170 are used for specifying a position and orientation of the first terminal 100. Further, the first storage unit 150 may receive information on the position and the orientation of the second terminal 200 from the second terminal in order to determine an overlapping state of the first and second terminals 100 and 200. The signals and information for identifying the overlapping state of the first and second terminals 100 and 200 are provided to the first controller 160 and used to determine the overlapping state.

The first sensing unit 170 may include various sensors, and collect sensing signals in order to specify the position and orientation of the first terminal 100. In the first sensing unit 170, when a content sharing mode is selected, at least one sensor is activated and collects the sensing signal. For example, the first sensing unit 170 may include an acceleration sensor, a gyroscope sensor, a terrestrial magnetism sensor, a gravity sensor, and the like. These sensors are used to collect sensing signals for specifying a orientation of the first terminal 100. On the other hand, the first terminal 100 may further include a magnetic field transceiver, an ultrasonic transceiver, a GPS module, and the like in order to identify the position thereof.

The first controller 160 controls a signal processing, a data transmitting, a data storing, and the like in order to support various functions relating to the operation of the first terminal 100. Especially, the first controller 160 may control a collection of information on the position and orientation of the first terminal 100, a determination of the overlapping state for the second terminal, a transmission of an input event for a selection of any one of the content items displayed on the second terminal 200 to the first terminal 200, and a reception of the selected content item from the second terminal 200. More particularly, the first controller 160 may collect information on a current position of the terminal using a magnetic field transceiver, an ultrasonic transceiver, a GPS, and the like. For example, the first controller 160 collects a general position information, and collects more precise position information of the first terminal based on received information by using a magnetic field transceiver, an ultrasonic transceiver, a UWB, an NFC communication module, and the like. The first controller 160 can determine which direction the first terminal is arranged using various sensors of the first sensing unit 170.

The first controller 160 may perform an operation of determining the overlapping state of the first terminal 100 with the second terminal 200 by detecting the position and orientation of the second terminal 200. The first controller 160 may determine which state the first terminal 100 overlaps with the second terminal 200 in, based on the position and orientation information of the first terminal 100. Similarly, in a case that the second terminal 200 may determine an overlapping state of the first terminal 100 with the second terminal 200. The first controller 160 may transmit various information relating to the position and the orientation of the first terminal 100 to the second terminal 200.

Meanwhile, when a content sharing mode is selected and the first terminal 100 overlaps with the second terminal 200, the first controller 160 makes the first transparent display unit 140 be transparent so that the user identifies the content items displayed on the display unit of the second terminal 200. Here, the first controller 160 may display menu items or icons for a selection of the content sharing mode on the first transparent display unit 140, and restricts a display of data on the first transparent display unit 140 so as to make the first transparent display unit 140 be transparent. Alternatively, a portion of the display unit of the first terminal 100 may be activated to be transparent instead of the whole screen.

Furthermore, the first controller 160 may collect a touch event generated on the first transparent display unit 140, and transmit selection signal correspond to the collected touch event to the second terminal 200. To this end, when the first terminal 100 is in the content sharing mode and overlaps with the second terminal, the first controller 160 identifies the second terminal 200 to share the content items with, and forms a communication channel for a transmission of touch events together with the second terminal 200. At this time, the first controller 160 may provide position information of a touch event and information relating to a form of the touch event, for example, times of taps, a touch down holding state, a drag state, and the like, to the second terminal 200. The first controller 160 may transmit information on a selection event for the content items designated by the touch event, to the second terminal 200. For the purpose, the first controller 160 identifies an overlapping state of the first terminal 100 with the second terminal 200 based on the position and orientation information received from the second terminal 200, and calculates which portion of the display unit of the second terminal 200 a touch event generated in the first transparent display unit 140 indicates.

The first controller 160 may provide the second terminal 200 with information on a position on the display unit of the second terminal 200 corresponding to the touch event generated in the first transparent display unit 140 and information on the sort of the touch events, as selection event information. The first controller 160 forms a NFC communication module based communication channel, an UWB based communication channel, and a Bluetooth based communication channel, together with the second terminal 200. The above-mentioned communication modules are activated according to a selection of a content sharing mode, and performs a transmission and reception of a signal to/from another adjacent terminal so as to process a signal for forming a communication channel together with another terminal.

When receiving a certain content item from the second terminal 200, the first controller 160 may store the received content item in the first storage unit 150, and/or display the content item on the first transparent display unit 140. Especially, the first controller 160 may temporarily store the received content item, and then it can semi-permanently store the received content item in the first storage unit 150 according to a user's request for a storage. Also, the first controller 160 may display the content items on the first transparent display unit 140, in which icons or thumbnails identical to those indicating the content items displayed on the display unit of the second terminal 200 are displayed, or the content items of the second terminal 200 are reproduced and displayed. _ For example, the first controller 160 receives an image item displayed in a form of a thumbnail on the display unit of the second terminal 200, and displays the image item on the first transparent unit 140, in which the image item is displayed in a form of the thumbnail, or on a whole screen of the first transparent display unit 140.

Further, the first controller 160 may receive a thumbnail form of a moving picture item from the second terminal 200, and displays it on the first transparent display unit 140, in which the thumbnail form of the moving picture item is displayed itself, or the moving picture item can be output on the first transparent display 140 as a reproducing screen.

The second communication unit 210 of the second terminal 200 supports a communication function of the second terminal. The second terminal 200 may include at least one of a UWB communication module, an NFC communication module, a Bluetooth communication module, and a WiFi communication module, similarly to the first communication unit 110. The second communication unit 210 may perform two functions similar to those of the first communication unit 110 in order to support the content sharing function of the present invention. First, in a case that the UWB module is used as the second communication unit, the second communication unit 210 receives a beacon signal from a plurality of beacon signal generators in order to determine the position of the second terminal 200, and transmits the beacon signal to the second controller 260 so that the second controller 260 determines the position information of the second terminal 200 based on the position of the plurality of beacon signal generator. On the other hand, in a case that the NFC module is used as the second communication unit 210, the second communication unit 210 alternately performs reading together with the NFC module prepared to the first communication unit 110 of the first terminal 100 and provides information for use in determining the position of the first terminal 100. In a case that the Bluetooth module or the WiFi module is used for the second communication unit 210, the second communication unit 210 can operate to identify the position of the second terminal 200.

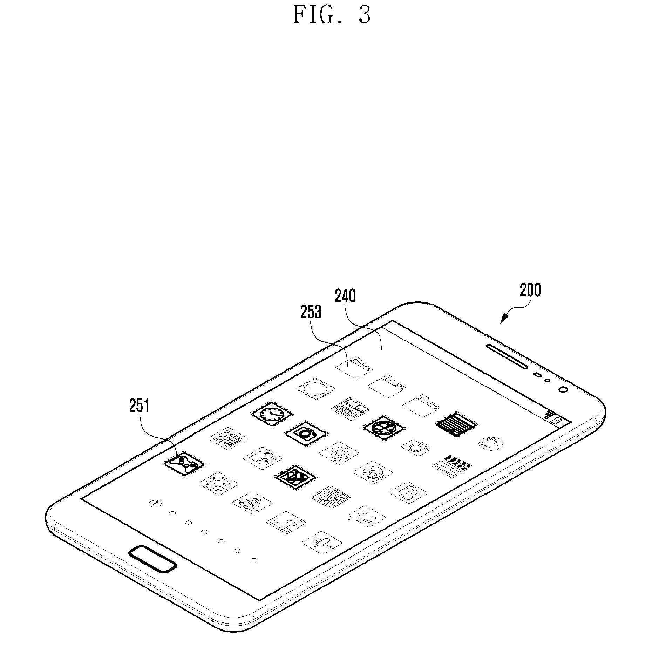

The second transparent display unit 240 may provide various screens relating to an operation of the second terminal 200. Especially, the second terminal 200 displays a menu item, or an icon for a selection of a content sharing mode in order to support a content sharing function. The second transparent display unit 240 may be prepared in a form of a touch screen, and provides an input event to the second controller 260 when the input event for a selection of a corresponding icon is generated. The second transparent display unit 240 may display at least one content item. At this time, the second transparent display unit 240 is capable of distinctively displaying a movable content item 251 and a non-movable content item 253, as shown in FIG. 3. That is, the second transparent display unit 240 may display a plurality of content items, in which when the content sharing mode is selected, the movable content item 251 is highlighted and displayed so that the movable content item 251 is distinguished from the non-movable content item 253. The second transparent display unit 240 may make the non-movable content item 253 to be displayed darkly, or in a relatively high transparency.

The second transparent display unit 240 may provide a defined background color or a background image throughout a whole screen thereof, so that the content items are identified through the first transparent display unit 140 more definitely. On the other hand, while the first terminal 100 may operate in a transmission mode of providing the content item, the second transparent display unit 240 is controlled to have a certain background color or a background image in order to improve a recognition ratio of the corresponding contents, or to display a screen having a previously prepared background color when the first transparent display unit 140 distinctly displays the movable contents and the non-movable contents. For example, a black screen or a white screen can be output in the second transparent display unit 240 so that the movable contents of the first transparent display unit 140 are more definitely displayed.

On the other hand, as described above, a generally opaque display unit instead of a transparent display unit may be employed as the display unit of the second terminal 200. Here, the movable content items among the content items are separately displayed on the display unit, or displayed in a form of arranged icons or a list, together with the other contents. On the other hand, where the first terminal 100 operates in a content transmission mode of providing content items, distinctly displaying the movable contents and the non-movable contents can be identically applied to the first terminal 100.

The second storage unit 250 may store various data and programs relating to the operation of the second terminal therein. Especially, the second storage unit 250 may store programs for driving communication modules included in the second communication unit 210, programs for operating sensors included in the second sensing unit 270, and data collected according to the operation of the programs. The second storage unit 250 may store a plurality of content items in order to support the content sharing function of the present invention, which includes the movable contents 251 and the non-movable contents 253. The movable contents 251 refers to contents to which a separate configuration key is not allocated, for example, contents on which a digital copyright is not held. The non-movable contents 253 refers to contents on which a digital copyright is held and of which movement is impossible due to the digital copyright.

The movable contents 251 may be displayed on the second transparent display unit 240 in a form of suitable icons or thumbnails. The non-movable contents 253 also may be displayed on the second transparent display unit 240 in a form of suitable icons or thumbnails. However, in a state that the content sharing mode is activated, the non-movable contents 253 may be configured not to be selected by an operator of the first terminal 100, and displayed relatively more darkly, or in more higher transparency in order to increase the recognition for the movable contents.

The second sensing unit 270 may include at least one sensor for detecting various signals in order to measure a position and a orientation of the second terminal 200. The second sensing unit 270 may include at least one of a gyroscope sensor, an acceleration sensor, a terrestrial magnetism sensor, and a gravity sensor, identically to the first sensing unit 170. Sensing signals which the second sensing unit 270 collects are transferred to the second controller 260 in order to measure the position and orientation of the second terminal 200.

The second controller 260 may control a transmission and processing of signals necessary for a control of an operation of the second terminal, a transmission and processing of data, and a transmission of the content items, in order to support the content sharing function of the present invention. More particularly, the second controller 260 supplies the second terminal 200 with electric power, while identifying whether an input event for a configuration of the content sharing mode is generated. If the corresponding input event is generated, the second controller 260 performs a collection of the signals for identifying the position and orientation of the second terminal 200. In this process, the second controller 260 controls the second communication unit 210 and the second sensing unit 270 to collect various communication signals and sensing signals.

On the other hand, the second controller 260 may provide the first terminal 100 with at least one of the position information and the orientation information of the second terminal 200, or receive at least one of the position information and the orientation information of the first terminal 100, according to a design scheme. In a case of receiving information, the second controller 260 may receive selection signal correspond to a touch event which is generated on the first transparent display unit 140, from the first terminal 100, and calculates the position of the second transparent display unit 240 corresponding to the corresponding selection signal. That is, the second controller 260 identifies a content item which corresponds to the selection signal received from the first terminal 100 and is arranged on the second transparent display unit 240. If the content item exists at a position corresponding to the correspond selection signal, the second controller 260 transfers the corresponding content item to the first terminal 100. At this time, the second controller 260 forms a communication channel together with the first terminal 100 by using the second communication unit 210, and provides the content item.

In the above-mentioned description, the movable contents and the non-movable contents are distinguished according to a transmission possibility of the contents from one terminal to another terminal. The content items may be classified with reference to an overlapping area even though the they correspond to the movable contents. That is, in the state that the first terminal 100 and the second terminal 200 overlap with each other, when the movable contents are arranged in the overlapping area, they are actually displayed as the movable contents. However, when the movable contents are arranged out of the overlapping area, they may be displayed as non-movable contents even though they can be moved. Accordingly, when the overlapping area of the first terminal 100 and the second terminal 200 is changed, a new content corresponding to the change may be displayed as a movable content. Further, even though the content is displayed as the movable content, the content arranged out of the overlapping area due to the change of the overlapping area can be displayed as a non-movable content. The content sharing system 10 may distinctly display the non-movable content, a content arranged as the movable content in the overlapping area, and a content arranged as a non-movable content out of the overlapping area.

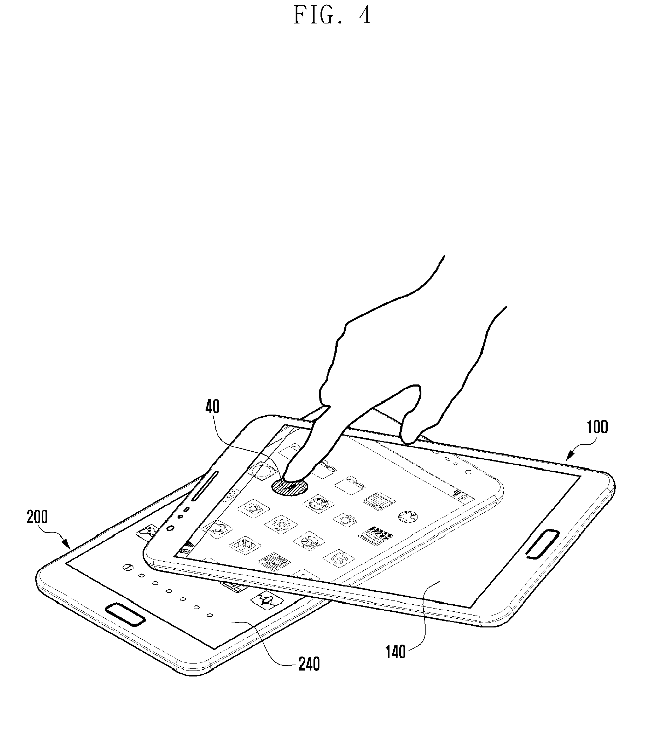

FIG. 4 is a view illustrating a function of sharing a content item according to a first embodiment of the present invention.

Referring to FIG. 4, firstly, the first terminal 100 and the second terminal 200 partially overlap with each other in order to support the content sharing function of the present invention as shown in FIG. 4. At this time, the first terminal 100 is in an activated content sharing mode. Accordingly, the first transparent display unit 140 may be in a transparent state. Here, the first transparent display unit 140 has desired menus or icons displayed thereon. However, icons or menus can be removed from the first transparent display unit 140 in order to definitely identify the items displayed on the display unit of the second terminal 200. For the purpose of keeping the transparency of the display unit, the content sharing mode allows a user to select a content receiving mode or a content transmission mode. That is, the first terminal 100 controls the first transparent display unit 140 to be transparent when the content receiving mode is selected. On the other hand, the second terminal 200 may distinctly display the movable items and the non-movable items of the items displayed on the second transparent display unit 240 when the content transmission mode is selected. For example, a user can specify a private content that he or she does not wishes to share with others to be no-movable items. That is, the second terminal 200 can provide a separate content item arrangement screen with relation to the content transmission mode of the content sharing function. At this time, the provided content item arrangement screen is to distinctly display the movable items on the screen displayed on the second terminal 200, or may be a screen for arranging the content items stored in the storage unit of the second terminal 200, which is provided through a separated diversion of a page.

When the content sharing mode is selected, the first terminal 100 and the second terminal 200 collect and process information to identify the mutual overlapping state thereof. That is, as described above, the first terminal 100 and the second terminal 200 respectively identify the position and orientation information, and according to the design scheme of one of the first and second terminals 100 and 200 process the information so as to identify the overlapping state. For example, the terminal in the content receiving mode collects the position and orientation information of the terminals 100 and 200, and determines the overlapping state based on the information. Otherwise, the terminal in the content transmission mode collects the position and orientation information of the terminals 100 and 200, and determines the overlapping state based on the information.

When it is completed to obtain the information on the overlapping state, a touch event generated in the first terminal 100 in which the content receiving mode is selected, is transmitted to the second terminal 200. At this time, a user which operates the first terminal 100 identifies a screen of the second terminal 200 through the first transparent display unit 140, while performing an operation of directly selecting the content items displayed on the screen of the second terminal 200.

An "A" content item 40 which is displayed on the display unit of the second terminal 200 and is touched through the first transparent display unit 140 of the first terminal 100 can be transmitted to the first terminal 100 from the second terminal. The "A" content item 40 may be displayed at a desired position of the first transparent display unit 140. For example, the shared "A" content item 40 is displayed at a separately designated position of the first transparent display unit 140, or at a position where the touch event is generated.

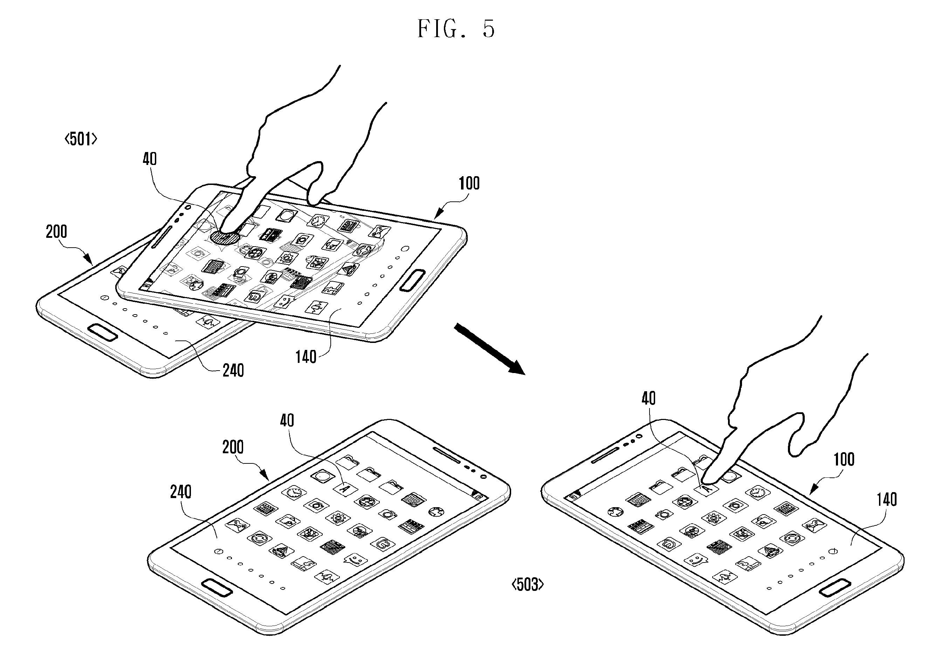

FIG. 5 is a view illustrating a function of sharing a content item according to the second embodiment of the present invention.

Referring to FIG. 5, firstly, in order to share content, users of the first and second terminals 100 and 200 respectively control their terminals to select the content sharing mode. In this process, the users may select menus for a selection of the content sharing mode, which are provided by the first terminal 100 and the second terminal 200, or perform the selection of the content sharing mode through a selection of a certain icon.

On the other hand, when the content sharing mode is selected, the first and second terminals 100 and 200 respectively collect position information and orientation information thereof, and transmit the information to each other. For example, the first terminal 100 receives the position and orientation information of the second terminal 200 from the second terminal 200, and identifies the overlapping state based on the collected position and orientation information. Especially, the first terminal identifies the overlapping state between the first transparent display unit 140 and the display unit of the second terminal 200. On the other hand, the first transparent display unit 140 displays a plurality of icons as shown in FIG. 4, but areas in which the icons are not displayed are made to be transparent, so that the display unit of the second terminal is reflected. Here, the first transparent display unit 140 is enabled not to display the plurality of icons, but to have a transparent screen. On the other hand, when the first transparent display unit 140 is in a transparent state, the display unit of the second terminal 200 may be identified through the first transparent display unit 140 because the first terminal 100 and the second terminal 200 are in the overlapping state as shown in 501 of FIG. 5. Then, the user may generate a touch event for selecting a certain content item displayed on the display unit of the second terminal 200, for example, a "Hold" event in which a touch-down state is held, on the first transparent display unit 140. Further, the user of the first terminal 100 drags the first terminal 100 on the second terminal 200 so as to release the overlapping state of the first and second terminals 100 and 200 as shown in 503 of FIG. 5.

Then, the second terminal 200 identifies the release of the first terminal 100 from the overlapping state, which notifies of the request for the corresponding content item sharing and a touch event corresponding to the selection of a certain content item, and transmits the selected content item to the first terminal 100 in response to the release of the first terminal 100. For the purpose, the first and second terminals 100 and 200 may form a communication channel to transmit the content item. Accordingly, the "A" content item 40 stored in the second terminal 200 is copied to the a desired position of the first terminal 100 and shared with the first terminal 100 as shown in 503 of FIG. 5. Here, a process of moving the "A" content item as well as the process of copying the "A" content item can be performed. That is, the "A" content item 40 stored in the second terminal 200 can be moved to the first terminal 100. In this case, the "A" content item 40 may be removed from the storage unit and the display unit of the second terminal 200.

As shown in FIGS. 4 and 5, according to the content sharing function after the first terminal 100 overlaps with the second terminal 200, the first terminal 100 allows the user to select a certain item provided by the second terminal 200 so as to share the content with the second terminal 200. The content sharing function refers to a pull-type content sharing function in which the first terminal 100 receives the content and pulls a desired content item from a side of the second terminal 200 which provides the content. The content sharing function can provide a more suitable condition, where a group including friends, family, and the like views pictures in a certain terminal together while sharing the desired pictures with one another. In a method of newly configuring a terminal and selecting a corresponding item in order to share a content when users of the terminal view the pictures while a certain user requests another user to share the pictures, the users must stop viewing the pictures while the owner of the terminals 100 and 200 perform a function of transmitting the corresponding picture to the certain user. However, when the pull-type content sharing function of the present invention is applied to the terminal, and the picture which the certain user desires is displayed on the terminal which transmits the content, the user can receive the picture without an interference of the owner of the terminal to which the content is transmitted. Accordingly, the other users are not interrupted in their viewing of the pictures and may carry out a desired work. Further, the present invention has an advantage in that where a plurality of users want the same picture, the user respectively can obtain the desired picture from the terminal which transmits the picture, through the pull-type content sharing function.

The method of selecting the content item of the second terminal 200 through the first transparent display unit 140 has been described. However, the present invention is not limited to the method. That is, in a state that the first terminal 100 and the second terminal 200 overlap with each other, the user selects the content item arranged on the transparent display unit of the first terminal 100 so as to instruct the second terminal 200 to share the corresponding content item. In FIG. 5, when a predetermined gesture operation, for example, a tap operation is performed twice with respect to a certain content item displayed on the first transparent display unit 140, the first terminal 100 supports a push-type content sharing function in which the first terminal 100 transmits the content item which is indicated by the corresponding tap operation, to the second terminal, and moves or copies the content item. In other words, in view of transmitting the content, the present invention allows the content item, which is stored in the terminal performing the transmission of the content, to be selected, and to be transmitted to another terminal.

As described above, the content sharing system 10 of the present invention can transmit a number of files by means of a proximity operation. Further, even when the user releases the proximity state immediately after operating a selection of a content item, the transmission of the content item can be still performed. Accordingly, it is possible to improve a user's convenience.

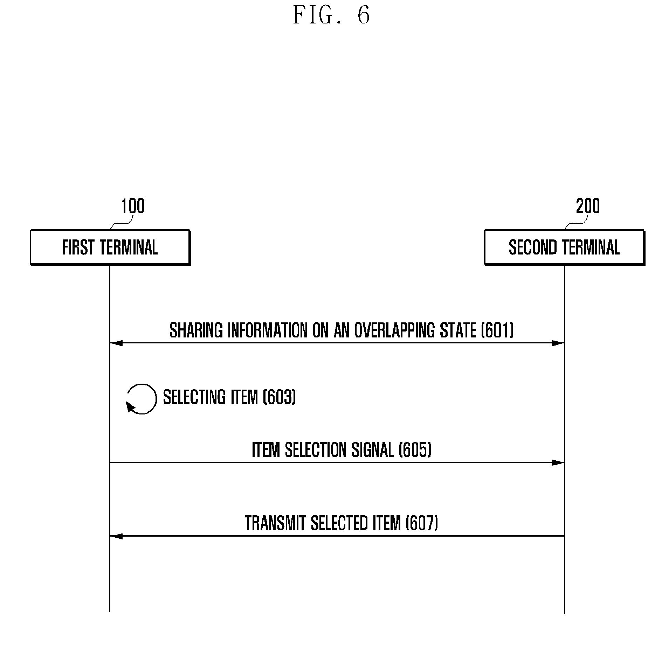

FIG. 6 is a view illustrating a method of sharing contents according to the embodiments of the present invention.

Referring to FIG. 6, according to the content sharing method the first terminal 100 and the second terminal 200 share information on an overlapping state thereof in step S601. For the purpose, the first terminal 100 and the second terminal 200 provide a content sharing mode, and respectively collect position and orientation information thereof when the content sharing mode is selected. Then, at least one of two terminals 100 and 200 identifies the overlapping state of the terminals 100 and 200 by using the corresponding information. Next, when the overlapping state is identified, the first terminal 100 and the second terminal 200 are in a standby state to share the content. At this time, the first terminal 100 and the second terminal 200 are arranged to overlap with each other so that at least one movable content item displayed on the display unit of the second terminal 200 is selected through the first transparent display unit 140 of the first terminal 100. Accordingly, the first terminal 100 and the second terminal 200 have an overlapping area larger than a predetermined area. In a case that the first and second terminals 100 and 200 have the overlapping area larger than the predetermined area, they are in the standby state to share the content. In the process, the position and orientation of the first terminal 100 and the second terminal 200 can be changed. Therefore, the first and second terminals 100 and 200 collect position and orientation information thereof in a predetermined period, or in a real time, so as to determine a change of the overlapping state. On the other hand, in a case that the movement of at least one of the first and second terminals 100 and 200 is stopped, the first and second terminals 100 and 200 can be in a standby state to share the content. For example, in a case that the first terminal 100 does not operate after the first terminal 100, which is in a content sharing mode, is placed on the second terminal 200 so as to overlap with the second terminal 200, the first terminal 100 collects information regarding position and orientation thereof in order to share the content. Here, the second terminal 200 is fixedly arranged at a desired location so that the first terminal is placed on the second terminal 200. Accordingly, the second terminal 200 can be in a standby state prior to the first terminal 100. In this case, the second terminal 200 collects information to determine the position and orientation thereof. Then, the second terminal 200 transmits the collected information to the first terminal 100 according to a design scheme, or stays in a state of collecting information on the position and orientation of the first terminal 100.

In step 601, when the first and second terminals 100 and 200 stay in the overlapping state, the user generates an input event to select at least one of the content items displayed on the display unit of the second terminal 200 through the first transparent display unit 140. Then, in step 603, the first terminal 100 collects an item selection signal corresponding to the input event generated by the user, and in turn transmits the item selection signal to the second terminal 200 in step 605. At this time, the first terminal 100 transmits a position value and a form, for example, hold, drag, release, tap, etc. of the touch event generated in the first transparent display unit 140 to the second terminal 200. Further, in a case that the first terminal 100 has the position and orientation information of the second terminal 200, the first terminal 100 calculates a value relating to location at which the input event generated by the user is matched with the display unit of the second terminal 200, which in turn transmits the calculated value as the item selection signal to the second terminal 200.

In step 607, when the second terminal 200 receives the item selection signal from the first terminal 100, it transmits a content item of a position corresponding to the item select signal to the first terminal 100. At this time, the second terminal 200 moves or copies the content item to the first terminal 100 according to the property of the item selection signal. For example, when a process of selecting the item is performed in an identical manner to that as described with reference to FIG. 4, the second terminal 200 moves the content item to the first terminal 100. Further, when a process of selecting the item is performed in an identical manner to that as described with reference to FIG. 5, the second terminal 200 copies the content item to the first terminal. That is, the second terminal 200 moves or copies the content item to the first terminal 100 in response to differently defined gesture operations.

As described above, in the description of the content sharing method of the present invention, when the content sharing mode is selected or the proximity between the terminals 100 and 200 is detected, the terminals 100 and 200 perform a preparation for an exchange of data in order to share the content. That is, one of the terminals 100 and 200 which transmits the content converts a screen mode to a screen interface which allow a user to easily select the content item. Furthermore, the terminals 100 and 200 perform the preparation for an activation and a change of configuration, which makes a wireless communication for the content sharing possible, and exchanges information on the kind of currently available wireless communication through an exchange of information between the first and second terminals 100 and 200 so as to negotiate an optimal connection scheme. For example, the terminals 100 and 200 negotiates for a selection of a communication module, which has a relatively suitable wireless environment, i.e. a data transmission rate, among the plurality of communication modules included in the communication units. The terminals 100 and 200 inform each other of physical characteristics such as a screen size, a position of a transceiver for specifying a position, and the like. Here, the transceiver includes the magnetic field transceiver, the ultrasonic transceiver, and the like, which can be applied to the terminals 100 and 200.

Thereafter, the terminal 100 adjusts the transparency of the first transparent display unit 140 so that the user easily identifies the screen of the second terminal 200. Simultaneously, the second terminal 200 displays the visually emphatic data to be transmitted. The second terminal 200 analyzes a touch operation of the user provided by the first terminal 100, and displays the visually emphatic data which is selected. Then, the first terminal 100 receives a feedback from the second terminal 200, and transmits it to the user in a form of sound, vibration, and the like. That is, the first terminal 100 guides the user with a sound, a vibration, a lamp, a brightness of the display unit, a contrast of color, and the like so that the user recognizes that the specified content item is normally selected by means of the touch operation of the user.

The content sharing method of the present invention allows the user to hold the touch state and to designate an additional operation next to the transmission of the content item, even after the selected content item is shared. For example, in a case of receiving a picture, the first terminal 100 allows the user to open and identify the received picture after the reception of the picture is completed, to add the picture to a mail, to upload it to an SNS, or to execute a tool for additionally editing the picture. For the purpose, the first terminal 100 provides gesture operations corresponding to the corresponding functions, or displays menu items at the same time when the content item is received, so that the user can express his/her intention and perform simple additional operations.

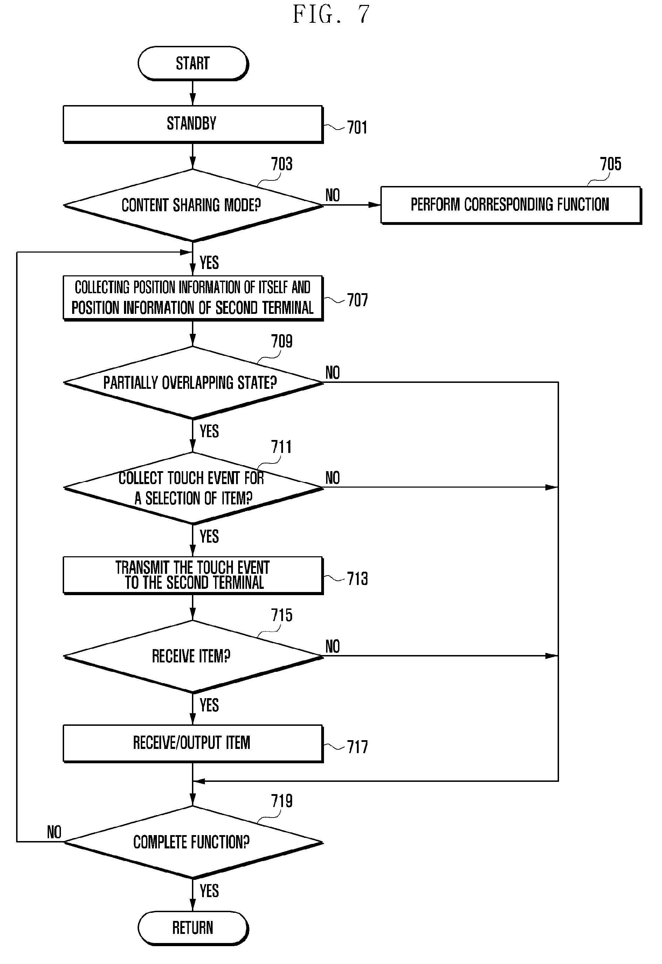

FIG. 7 is a flowchart illustrating a method of operating a first terminal in order to share the contents according to the embodiments of the present invention.

Referring to FIG. 7, according to a method of operating the first terminal which performs the content sharing method of the present invention, in step 701, the first terminal 100 stays in a standby state. Here, the standby state refers to a state that the content sharing mode of the present invention is not selected, in which the first terminal 100 performs a specified function according to predetermined schedule information, and provides a standby screen or a menu screen. On the other hand, in step 703, the first terminal 100 identifies whether an input event for a content sharing mode is generated. In this step, when the first terminal 100 identifies that the input event is not generated, the first terminal 100 proceeds to step 705 and performs a specified function thereof according to the predetermined schedule information, or another function except for the content sharing function according to the user's input.

On the other hand, in step 703, when the input event for the selection of the content sharing mode is generated, the first terminal 100 proceeds to step 707 and collects position information thereof and position information of the second terminal. Here, the first terminal 100 can collect orientation information, in which the terminal is placed, as well as the position information. On the other hand, the second terminal 200 also stays in the content sharing mode to collect position information thereof. Accordingly, the second terminal 200 collects the position and orientation information thereof, and provides the information to the first terminal 100. Especially, the first terminal collects the position and orientation information thereof, which in turn searches the second terminal 200 in the content sharing mode through a scanning operation. Then, the first terminal 100 transmits a message of requesting a transmission of the position and orientation information to the second terminal 200.

When the first terminal 100 receives the collection of the position and orientation information of the second terminal 200, the first terminal 100 proceeds to step 709 to identify whether the first terminal 100 partially overlaps with the second terminal. Especially, the first terminal 100 can identify whether the overlapping portion has a predetermined size, so that the user selects at least one content item, which is displayed on the display unit of the second terminal, through the first transparent display units 140. If the overlapping portion of the first and second terminals 100 and 200 does not have the predetermined size, the first terminal 100 passes by step 717 and selectively proceeds to the step 707 to performs the processes after the step 707 again.

When the first terminal 100 determines that an overlapping portion with the second terminal 200 has a larger size than the predetermined size, the first terminal 100 proceeds to step 711 to identify whether a touch event for the selection of the item is collected. In this process, the user identifies the display unit of the second terminal 200 through the display unit 140 of the first transparent display unit 140, and generates the touch event on the first transparent display unit 140 so as to perform an operation of selecting the content item displayed on the display unit of the second terminal 200. When the touch event is generated on the first transparent display unit 140, the first terminal 100 transmits the corresponding touch event to the second terminal 200 in step 713.

Next, in step 715, the first terminal 100 identifies whether the content item is received from the second terminal 200. If the content item is received by the first terminal 100, the first terminal 100 proceeds to step 717 to display the received content item. That is, the first terminal 100 stores the content item which is received from the second terminal 200, in the first storage unit, and displays the content item on the first transparent display unit 140. Then, in step 717, the first terminal 100 identifies whether a function completion event for a completion of the content sharing mode is generated. In this step, if the function completion event is generated, the first terminal 100 returns to the step 701 to perform the processes after the step 701. If the function completion event is not generated, the first terminal 100 proceeds to the step 707 to collect the position information thereof and the position information of the second terminal 200 in a predetermined period, or in real time. Then, the first terminal 100 performs a process of identifying the overlapping state with the second terminal 200.

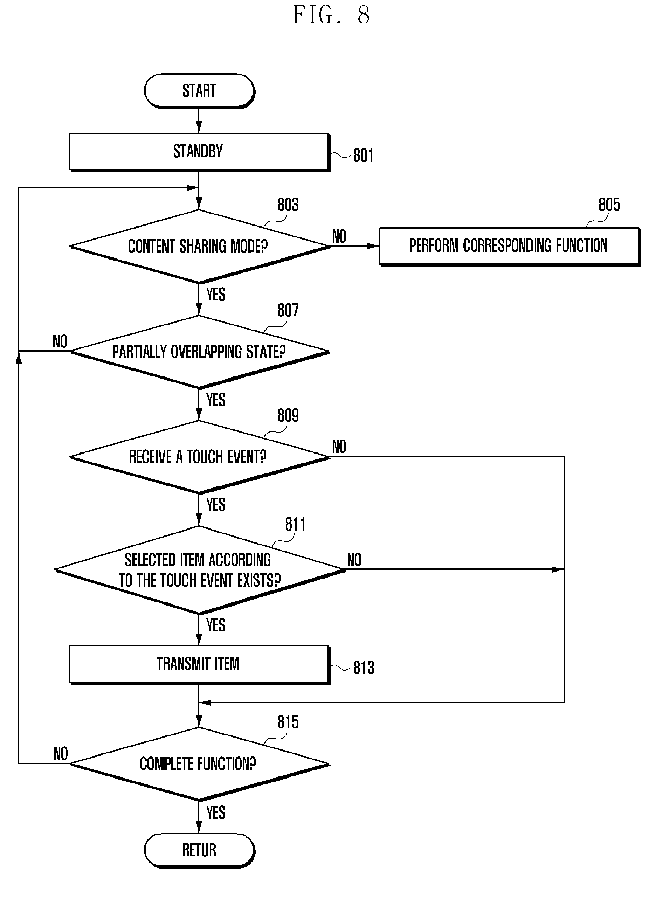

FIG. 8 is a flowchart illustrating a method of operating a second terminal in order to share the contents according to the embodiments of the present invention.

Referring to FIG. 8, according to the method of operating the second terminal of the present invention, in step 801, the second terminal 200 operating in a standby state, detects an input event. When the input event is generated, in step 803, the second terminal 200 identifies whether an input event for a selection of a content sharing mode is generated. Here, if the input event for the selection of the content sharing mode is not generated, the second terminal 200 proceeds to step 805 to perform a function, for example, file reproduction function, communication function, and the like, according to the received input event. In addition, when an input signal for a turning-off of the terminal is generated, the second terminal 200 turns off the electric power.

On the other hand, in step 803, when an input event for a selection of the content sharing mode is generated, the second terminal 200 proceeds to step 807 to identify whether the second terminal 200 partially overlaps with the first terminal 100. Especially, the second terminal 200 identifies whether an input event for a selection of a content transmission mode among the content sharing mode is generated. If the input event is generated in response to the selection of the content transmission mode, the second terminal 200 proceeds to step 807 to identify the overlapping state and to distinctly display items. In this process, the second terminal 200 collects the position and orientation information thereof while scanning and detecting the first terminal 100 which is in the content sharing mode, especially, a content receiving mode, collecting the position and orientation information of the first terminal 100, or providing the position and orientation information thereof to the first terminal 100. If it the first terminal 100 does not identify the overlapping state of the first terminal with the second terminal, but the terminal in a content transmission mode identifies the overlapping state, so the second terminal 200 can identify the overlapping state. Otherwise, if it is designed that the first terminal 100 which stays in the content receiving mode identifies the overlapping state, step 807 may be omitted.

Next, in step 809, the second terminal 200 identifies whether a touch event for a selection of an item is received. For the purpose, the first terminal 100 transmits selection signal corresponds to a touch event to the second terminal 200 when a user touches a portion of the first transparent display unit so as to generate the touch event. When receiving the touch event, in step 811, the second terminal 200 identifies an absence or a presence of the item selected according to the touch event. At this time, the second terminal 200 determines which position of the second transparent display unit 240 the touch event generated in the first transparent display unit 140 corresponds to, with reference to the overlapping state with the first terminal 100. However, if the first terminal 100 calculates and provides the position information on the second transparent display unit 240 according to the touch event, a process of calculating the position on the second transparent display unit 240 which corresponds to the touch event may be omitted.

If a selected item according to the touch event exists, in step 813, the second terminal 200 transmits the selected item to the first terminal 100. Otherwise, if the selected item does not exist at a position on the second transparent display unit 240 which is matched with the touch event, the second terminal 200 ignores the corresponding touch event, or outputs alert or guide information according to a selection of a wrong position. That is, the second terminal 200 can output a message of indicating that any no content item exists at the corresponding position. In addition, if the item indicated by the touch event is a non-movable item, the second terminal 200 outputs guide information of notifying that the corresponding content item is a non-movable or non-duplicable item.

Next, in step 815, the second terminal 200 identifies whether an input event for the completion of the content sharing function is generated. If the corresponding input event is not generated, the second terminal 200 proceeds to step 803 to perform processes after step 803 again. On the other hand, if an input event for the completion of the function is generated, the second terminal 200 proceeds to step 801 to perform the processes after step 801 again.

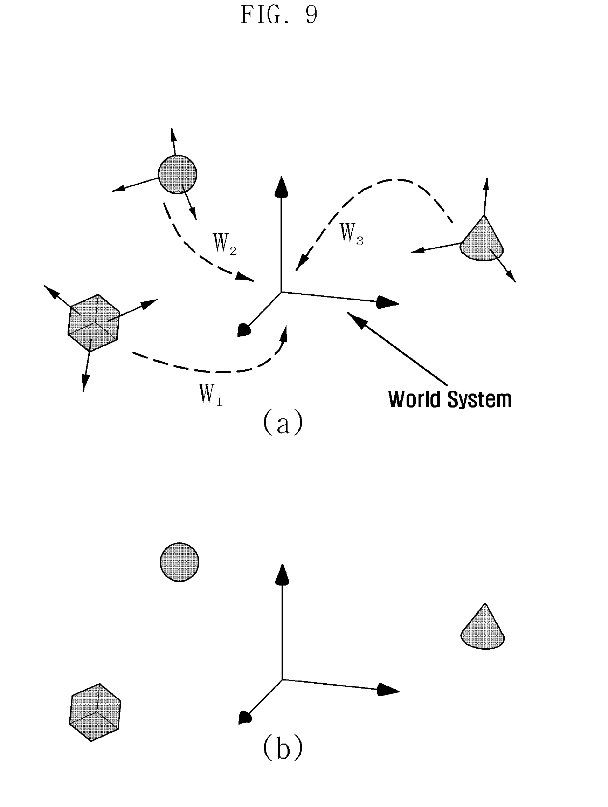

FIG. 9 is a view illustrating a specification of a position and a orientation of the terminals according to the embodiments of the present invention.

Referring to FIG. 9, position and orientation information with respect to each terminal are determinedin order to calculate the overlapping area between the first terminal 100 with the second terminal 200. For the purpose, since a certain object has an absolute position in a space by reference of a World coordination system, an inclination value of an inherent coordination of each object to the World coordination can be technically applied to the object. That is, as described above, the overlapping state of the first and second terminals 100 and 200 can be determined specifying position and orientation information. Triangulation such as GPS, LBS, and the like can be used as a technique of measuring a position of the object. Also, an accelerometer, a terrestrial magnetism sensor, a gyroscope, and the like can be used to measure a position of the object. In the position measuring technique, electric waves or ultrasonic waves can be used. In the present invention, four or more sensors can be used to specify a precise position in the three dimensional space

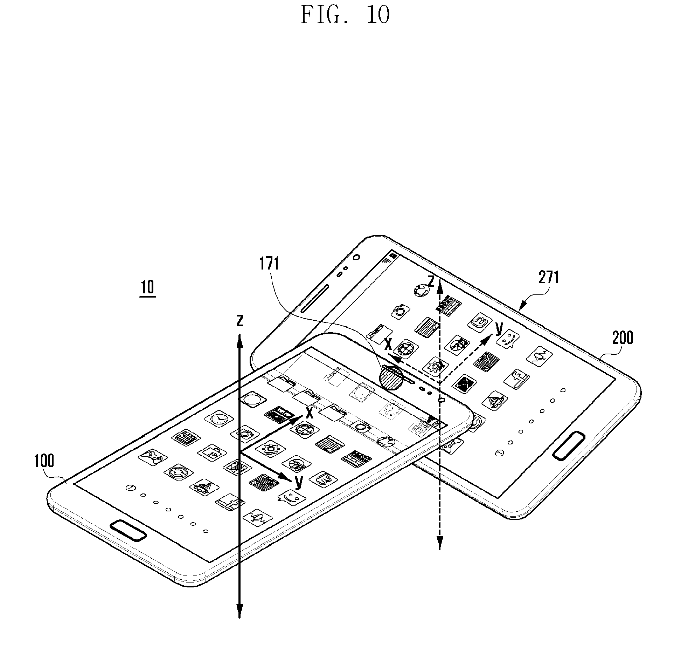

FIG. 10 is a view illustrating a method of specifying a position and a orientation of the terminals according to the embodiments of the present invention.

As shown in FIG. 10, the content sharing system 10 includes an electromagnetic field generator 171 in order to determine the position of the terminals 100 and 200. The second terminal 200 includes an electromagnetic field sensor 271. In a case of generating an electromagnetic field, the second terminal 200 can identify the position of the first terminal 100 by using the electromagnetic field sensor 271. Here, the electromagnetic field generator 171 may be an example of the first sensing unit 170 of the first terminal 100 as described above, and the electromagnetic field sensor 271 may be an example of the second sensing unit 270 as described above.

The electromagnetic field sensor 271 provided to the second terminal 200 is a panel formed with antennas having a 'U' shape, which are arranged in a form of lattices on a plane. The electromagnetic field sensor 271 has a transparent electrode. When the electromagnetic field sensor 271 is disposed on an upper surface of the second transparent display unit 240, it is possible to precisely sense the position of the electromagnetic field generator 171 of the first terminal 100.

The relative position information of the electromagnetic field generator 171 of the first terminal 100 can be obtained through the electromagnetic field sensor 271. The physical characteristics may include distance from positions of the second terminal at which the first transparent display unit 140 and the electromagnetic field generator 171 are arranged, and the orientation of the first terminal. Therefore, the distance information and the orientation information are added to the relative position information, and the result of adding can be converted into position and orientation information in the space. The overlapping area of each terminal 100 or 200 can be precisely calculated by using the obtained position and orientation information. As a result, the calculated information can be used to calculate the subject or intention in response to a user's input operation transmitted from the corresponding terminal.

On the other hand, in the content sharing system 10 according to the embodiments of the present invention, a presumption of the overlapping can be performed by a touch panel of the transparent display unit provided to each terminal 100 or 200. For the purpose, when the first transparent display unit 140 partially overlaps with the second transparent display unit 240, the first terminal 100 or the second terminal 200 can detect an electric change caused by means of electric devices, for example, transistor elements or wired devices configuring the transparent display unit, or electrostatic capacitors configuring a touch panel. The second terminal 200 uses the wired devices, which configure the transparent display unit or the touch panel arranged on the second transparent display unit, as antennas, and radiates some signals through the corresponding configuration. Then, the second terminal 200 determines the overlapping state of the first terminal 100 through a feedback thereto. For example, the second terminal distinguishes a signal which is generated in the overlapping area of the first terminal 100, from a signal which is generated out of the overlapping area of the first terminal, through a feedback signal, and determines which portion of the second terminal 200 the first terminal 100 overlaps with. Further, the second terminal 200 detects a change in electrostatic capacity of the touch panel provided to the second transparent display unit 240, so as to identify the overlapping area of the first terminal 100. That is, the second terminal 200 can identify a variation of the electrostatic capacity between the area of the second terminal 200 which the first terminal 100 overlaps and the area of the second terminal 200 which the first terminal 100 does not overlap. For this, the second terminal 200 provides a separate touch panel operation mode in order to identify the overlapping area of the first terminal 100. Further, in order to identify the overlapping area, the separate touch panel is provided with electric power higher than that provided to a general touch panel to increase a sensitivity of the touch panel. Accordingly, the second terminal 200 can more precisely identify the variation of the electrostatic capacity in the overlapping area of the first terminal 100. When it is completed to identify the overlapping state of the first terminal 100 with the second terminal 200, the content sharing system 10 allows the user to select the content item displayed on the display unit of the second terminal 200 through the first transparent display unit 140, and transmits the content item according to the user's selection so as to support the content sharing function. In view of a configuration in which the transparent display unit determines the overlapping state of the terminals, the display units included in the first and second terminals function as sensors. That is, the transparent display units can operate as the sensors for a predetermined time in order to identify the overlapping state of the terminals.

As described above, the content sharing function of the present invention allows the user to easily perform a selection of data, an access to data, a certification for data, a transmission of data and an execution of data with very simple operation, resulting in an improvement of user's convenience. Further, the content sharing function of the present invention can use all of push type and pull type data exchange schemes. Therefore, it is possible to apply the content sharing function to various fields.

On the other hand, the above-mentioned terminal can include more additional modules according to a providing specification. That is, in a case of using the terminal as a communication terminal, the terminal additionally includes a NFC module for near field communication, an interface for transmission and reception of data depending on a wired or wireless communication scheme thereof, an Internet communication module for performing an Internet access in communication with the Internet, a digital broadcasting module for receiving and reproducing digital broadcasting, and the like. With a convergence trend of digital devices, these modules as mentioned above have a lot of variations, all of which cannot be listed. However, structural elements on an equality with the aforementioned modules can be additionally included in the digital devices. The terminal of the present invention can exclude or replace certain structural elements with others depending on its provided specification. It will be understood by a person skilled in this art.

Furthermore, the terminal according to the embodiments of the present invention can include all information communication devices, multimedia devices, and applied devices thereof, which include a Portable Multimedia Player (PMP), a digital broadcasting player, a Personal Digital Assistant (PDA), a music player such as an MP3 player, a portable game terminal, a smart phone, a notebook, a hand-held PC, and the like, as well as all mobile communication terminals which are operated by communication protocols corresponding to various communication systems.

While the present invention has been shown and described with reference to certain embodiments thereof, it will be understood by those skilled in the art that various changes in form and details may be made therein without departing from the spirit and scope of the present invention as defined by the appended claims.

## Claims

1. A content sharing system, comprising:
a first terminal having a display unit for displaying at least one content item thereon; and
a second terminal having a transparent display unit for selecting the at least one content item displayed on the first terminal over the transparent display unit on a state when the second terminal partially overlaps the first terminal so that the selected at least one content can be transferred to the transparent display unit of the second terminal during a receiving mode.

2. The content sharing system as claimed in claim 1, wherein at least one of the first and second terminals determines the overlapping state based on a position and orientation with respect to each other and calculates a location of a touch input corresponding to the selected at least one item on the second terminal.

3. The content sharing system as claimed in claim 1, wherein the display unit of the first terminal providing a specific background screen so that the at least one content item displayed thereon is distinctively displayed through the transparent display unit.

4. The content sharing system as claimed in claim 1, wherein the first terminal distinctly displays a content item which is allowed to be transferable to the second terminal, and a content item which is not allowed to be transferable to the second terminal.

5. The content sharing system as claimed in claim 1, wherein the first terminal transfers the at least one content item selected by the second terminal when the overlapping with second terminal is released.

6. The content sharing system as claimed in claim 1, wherein the second terminal copies or moves the selected at least one content item from the first terminal.

7. The content sharing system as claimed in claim 1, wherein the first and second terminals comprises at least one of a GPS module, a UWB module, an NFC module, a Bluetooth module, and a WiFi module for determining its position information and at least one of acceleration sensor, gyro sensor, terrestrial magnetism sensor, and gravity sensor for determining orientation information with respect to each other, wherein the overlapping state of the first terminal with the second terminal based on the position and orientation information.

8. A portable terminal, comprising:
a transparent display unit, for detecting a touch input to select at least one content item displayed on another portable terminal when the transparent display unit is partially overlaid over the another portable terminal forming a communication channel there between and providing the selected at least one content from the another terminal on the transparent display unit for execution.

9. The portable terminal in claim 8, wherein the terminal displays the at least one content from the another terminal at a location where the touch input is made on the transparent display unit thereon.

10. The portable terminal as clamed in claim 8, wherein the least one content comprises a movable content that is transferable and a non-movable content that is not transferrable.

11. A content sharing method, comprising:
forming a communication channel for transmitting at least one content item when a first terminal having a transparent display unit partially overlaps over a second terminal; and
providing the at least one content item from the second terminal on the transparent display unit of the first terminal in response to an input event on the transparent display unit of the first terminal selecting the at least one content item from the second terminal in a state that the first terminal partially overlaps over the second terminal.

12. The content sharing method as claimed in claim 11, further comprising:
displaying a screen on the display unit of the second terminal having a predetermined background color so that the content item of the second terminal is distinctively displayed on the transparent display unit of the first terminal.

13. The content sharing method as claimed in claim 11, further comprising:
matching a position, which corresponds to the input event generated on the transparent display unit of the first terminal, with the at least one content item displayed on the second terminal; and
identifying the selected at least one content item according to the matched position and displaying the identified at least one content item in the first terminal.

14. The content sharing method as claimed in claim 11, further comprising:
identifying an overlapping state of the first terminal with the second terminal based on a position and orientation information with respect to each other.

15. The content sharing method as claimed in claim 14, wherein the identifying step comprises at least one of:
detecting a variation of electrostatic capacity of a touch panel provided in the display unit of the second terminal with which the first terminal partially overlaps, and identifying the overlapping area of the first terminal with the second terminal by using a difference of the electrostatic capacity between the overlapping area and other areas.
